# EUROPEAN PATENT SPECIFICATION

(11) **EP 1 746 274 B1**
(45) Date of publication and mention of the grant of the patent: **07.05.2008**
(21) Application number: 06014508.3
(22) Date of filing: 12.07.2006
(51) Int. Cl.: F02D 41/02, F02D 41/40, B60K 31/00

(54) **Fuel control system and method**
Verfahren und Vorrichtung zur Regelung der Kraftstoffzumessung
Procédé et dispositif de contrôle de carburant

(30) Priority: 13.07.2005 JP 2005204643
(43) Date of publication of application: 24.01.2007
(73) Proprietor: Mazda Motor Corporation, Aki-gun, Hiroshima 730-8670 (JP)
(72) Inventor: Tanimura, Kenji c/o Mazda Motor Corp., Aki-gun,Hiroshima 730-8670 (JP); Nakai, Eiji c/o Mazda Motor Corp., Aki-gun,Hiroshima 730-8670 (JP); Sahara, Masanori c/o Mazda Motor Corp., Aki-gun,Hiroshima 730-8670 (JP); Morinaga, Shinichi c/o Mazda Motor Corp., Aki-gun,Hiroshima 730-8670 (JP); Sasaki, Kazunari c/o Mazda Motor Corp., Aki-gun,Hiroshima 730-8670 (JP)
(74) Representative: Müller-Boré & Partner Patentanwälte

(56) References cited:
- EP-A- 1 647 687
- EP-A1- 1 304 458
- EP-A2- 1 455 070
- DE-C1- 10 033 158

## Description

This invention relates to a fuel injection control system, method and computer program product for an engine, particularly for a diesel engine having a particulate filter in its exhaust system to be periodically regenerated.

Conventionally, there is provided, in an exhaust system of a diesel engine, a filter to trap exhaust gas particulates exhausted from a combustion chamber of the engine, and there is known, as shown for example in European Patent Application EP 1 647 687 A1, a means for regenerating the filter by providing unburned fuel to an oxidizing catalyst arranged upstream of the filter, raising an exhaust gas temperature with the catalytic reaction heat, and then burning out the exhaust gas particulate trapped in the filter at the elevated temperature.

In more detail, there are provided pressure sensors respectively upstream and downstream sides of said filter. If a pressure difference detected by the pressure sensors is more than a predetermined value, it is determined that a predetermined amount or more of exhaust gas particulates is trapped in the filter, and a post injection (additional injection) is made to a combustion chamber of the engine during an expansion stroke in addition to a main injection made during a normal fuel injection timing (around a top dead center of a compression stroke). Since at least part of the fuel is still unburned when exhausted out of the combustion chamber, it is oxidized (burned) when entering the oxidizing catalyst to raise its temperature. Then the exhaust gas at extremely high temperature flows into the filter located downstream of the oxidizing catalyst and this exhaust gas heat causes the particulates trapped in the filter to be burned to regenerate the filter.

Also during the filter regeneration, when an engine operating condition transition to a predetermined low load region where efficiency of the filter regeneration is not good (in other words, the exhaust gas temperature is not likely to increase), the post injection is generally stopped temporarily in order to prevent fuel economy deterioration.

During the filter regeneration, there is a situation where a cruise control is performed to maintain a target speed of a vehicle. The cruise control preferably is generally controlling a main injection amount to generate a desired torque to maintain the target speed of the vehicle. For instance, when the vehicle enters a downhill from a flat road, the desired torque to maintain the target speed decreases, then the main injection amount (engine) is decreased. If the post injection were temporarily stopped to prevent the fuel economy deterioration, there would be a possibility of a torque shock, since a relative fraction of the total fuel amount injected for the post injection would be relatively larger than in a case that a higher engine load condition.

In view of the above disadvantage of the prior arts, it is therefore an object of the present invention to substantially prevent a torque shock from occurring when a cruise control and a filter regeneration are performed.

This object is solved according to the invention by the features of the independent claims. Preferred embodiments of the invention are subject of the dependent claims.

In order to achieve this object, the present invention provides, in its first aspect, a fuel control system for an engine. The system comprises a filter means having a filter to trap particulates or soot in exhaust gas from the engine and having oxidizing catalyst function to promote oxidizing reaction of the exhaust gas to heat the filter with heat from the oxidizing reaction, a fuel control means to control amount and/or timing of fuel to be injected into at least one combustion chamber of the engine by at least one fuel injector, and a filter regeneration means to perform a filter regeneration by causing the fuel control means to make a main injection around or substantially at a top dead center of a compression stroke and then to make a post injection during the following expansion stroke when amount of particulates or soot trapped in the filter is more than a predetermined amount and an engine load is higher than a predetermined load. The system further comprises a cruise control means to perform a cruise control by causing the fuel control means to (directly or indirectly) control the main injection amount so as to substantially maintain a target driving speed of a vehicle, wherein the filter regeneration means causes the fuel injection control means to continue the post injection even if an engine load is lower than the predetermined load when the cruise control means performs the cruise control and the filter regeneration means performs the filter regeneration.

According to the fuel control system of the first aspect of the present invention, during the filter regeneration, if the cruise control is performed, even when an engine load is lower than the predetermined load, the post injection is continued to be made by the fuel injection control means. Therefore, in case that the cruise control means performs the cruise control during the filter regeneration, the torque shock occurrence caused by stopping the post injection when the engine operating condition enters the predetermined low load region can be prevented.

In the fuel control system of the first aspect of the present invention, if the cruise control means does not perform the cruise control when the filter regeneration is performed, the filter regeneration means may cause the fuel injection control means to stop the post injection by the fuel injection control means, when an engine load is lower than the predetermined load. Thereby, if the cruise control means does not perform the cruise control during the filter regeneration, when the engine load becomes lower than the predetermined load, the filter regeneration means causes the fuel injection control means to stop the post injection. That is, during the filter regeneration, in a case that the cruise control means does not perform the cruise control, when the engine operating condition enters a predetermined low load region where an efficiency of the filter regeneration is not good, the post injection is stopped, fuel consumption may be reduced.

Further the fuel control system of the first aspect of the present invention may comprise a pressure difference detection means for detecting a pressure difference between upstream and downstream of the filter to determine that the predetermined amount of particulates or soot is trapped in the filter if the detected pressure difference is more than a predetermined threshold. The pressure difference detection means may comprise an upstream pressure sensor and a downstream pressure sensor respectively arranged upstream and downstream of the filter. Thereby, the amount of particulates can be properly estimated.

The present invention also provides, in its second aspect, a method for fueling directly in or controlling a fuel supply to a combustion chamber of an internal combustion engine on a vehicle having a filter to trap particulates or soot in an exhaust system of the engine. The method comprises the step of supplying a main fuel injection around or substantially at a top dead center in a compression stroke, and the step of, if an engine load is higher than a predetermined threshold and a predetermined amount of particulates or soot is trapped in the filter, supplying at least one post fuel injection after the main fuel injection in an expansion stroke following said compression stroke for regenerating the filter. Furthermore, the post fuel injection is continued at least partly, even if an engine load is not higher than the predetermined threshold, when cruise control is performed to maintain a target speed of the vehicle.

According to the method of the first aspect of the present invention, during the filter regeneration, if the cruise control is performed, even when an engine load is lower than the predetermined load, the post injection is continued to be made. Therefore, in case that the cruise control is performed during the filter regeneration, the torque shock occurrence caused by stopping the post injection when the engine operating condition enters the predetermined low load region can be prevented.

In the method of the second aspect of the present invention, the post fuel injection may comprise a first post fuel injection and a second post fuel injection supplied after the first post injection. The second post fuel injection may be stopped while the first fuel injection is continued. In this respect, the first post injection may be burned in the combustion chamber while the second post injection may not in the combustion chamber but may be burned in an oxidizing catalyst arranged upstream of the filter. Therefore, fuel consumption may be reduced without substantial torque shock, since the second post injection would not generate any substantial torque due to its late timing in the expansion stroke or exhaust stroke.

According to a third aspect of the invention, there is provided a computer program product, in particular embodied in a computer-readable storage medium or a signal, the computer program product comprising computer-readable instructions which, when loaded and executed on a suitable system, in particular according to the invention or a preferred embodiment thereof, perform a method for fueling directly in a combustion chamber of an internal combustion engine on a vehicle according to the invention or a preferred embodiment thereof.

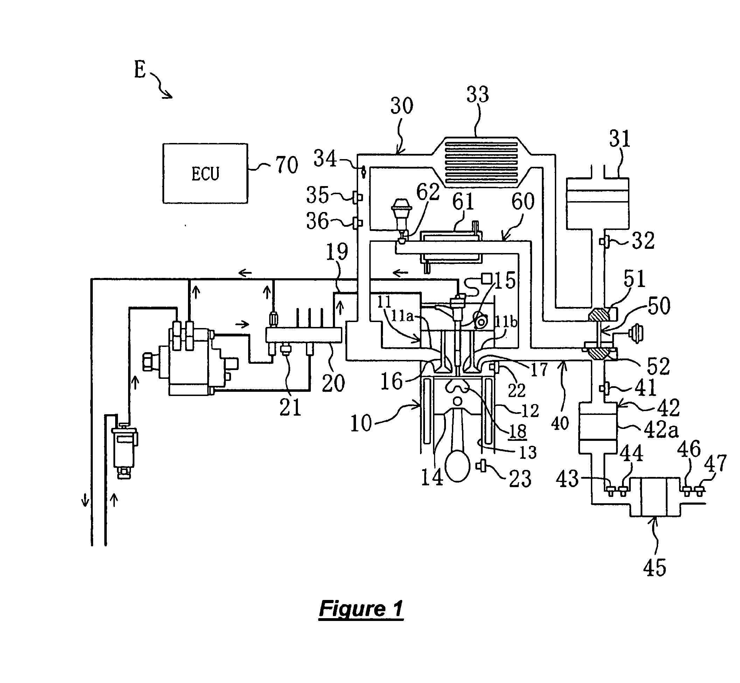

These and other objects, features and advantages of the present invention will become more apparent upon reading of the following detailed description of preferred embodiments and accompanying drawings. It should be understood that even though embodiments are separately described, single features thereof may be combined to additional embodiments. Figure 1 is a schematic diagram showing a diesel engine according to an embodiment of the present invention;
Figure 2 is a block diagram showing a fuel control system for an engine according to the embodiment of the present invention; and
Figure 3 is a flowchart showing a method for controlling fuel injection to an engine according to the embodiment of the present invention.

Preferred embodiments of the present invention will now be described with reference to the drawings, starting with Figure 1 which is a view schematically showing an engine system E. The system E comprises an internal combustion engine 10, preferably a diesel engine (hereafter referred to as engine), although it may be a direct injection spark ignited engine, as long as fuel can be substantially directly injected into a combustion chamber. The system E also comprises an intake passage 30 in which air preferably inducted from outside flows, an exhaust passage 40 in which exhaust gas exhausted from said engine 10 flows, preferably a turbocharger 50 in which a compressor 51 and a turbine 52 preferably are coaxially connected, and a controller (ECU) 70 which performs controls of vehicle devices including said engine 10.

The engine 10 comprises a cylinder head 11 within which at least one intake port 11 a and at least one exhaust port 11 b are formed, and a cylinder block 12. Formed in the cylinder block 12 is a cylinder 13, in which a piston 14 is inserted. A space substantially defined by the cylinder head 11, the piston 14 and a wall of the cylinder 13 forms a combustion chamber 18. The engine 10 also comprises an injector 15 to inject fuel substantially into the combustion chamber, an intake valve 16 open and close an intake passage preferably substantially sequentially with an rotational angle of a crank shaft which reciprocally moves the piston 14 to induct air into the combustion chamber 18, and an exhaust valve 17 to open and close an exhaust passage preferably also substantially sequentially with an rotational angle of the crank shaft to exhaust combusted gas out of the combustion chamber 18. Although the cylinder 13 shown in Figure 1 is only one, there may be a plurality of cylinders in the engine 10 and same number of the injectors 15 and the other parts described above.

The injectors 15 preferably are connected through a fuel supply pipes 19 to a common fuel rail 20, to which high pressure fuel is supplied through a fuel delivery system including a high pressure pump from a fuel tank (not shown). A fuel pressure sensor 21 is provided in the common fuel rail 20 to detect a fuel pressure at the common rail 20.

Further, there are provided on or at the engine 10 an engine coolant temperature sensor 22 to detect temperature of coolant of the engine 10, a crank angle sensor 23 to detect a rotational angle of the crank shaft and eventually its rotational speed.

The intake passage 30 connects through an intake manifold to an intake port 11 a at or near its downstream end, and to an air cleaner 31 at or near its upstream end. An intake airflow sensor 32, the compressor 1 of the turbocharger 50, an intercooler 33, a throttle valve 34, an intake temperature sensor 35 and/or an intake pressure sensor 36 are provided preferably sequentially from the upstream side in the intake passage 30.

The intake airflow sensor 32 detects airflow or a mass of air inducted into the engine 10 to output respective signals to the controller 70. The turbocharger 50 preferably has a variable geometry to make its supercharging efficiency appropriate preferably depending on an engine operating condition such as an engine speed. The intake temperature sensor 35 and/or intake pressure 36 respectively detect a temperature and/or a pressure of the inducted air into the engine 10.

The exhaust passage 40 is connected to an exhaust port 11 b through an exhaust manifold. The turbine 50 of the turbocharger 50, a first exhaust temperature sensor 41, an oxidizing catalyst converter 42, a second exhaust temperature sensor 43, a first exhaust pressure sensor 44, a diesel particulate filter (DPF, hereafter referred to as filter) 45, a second exhaust pressure sensor 46, and/or a third exhaust temperature sensor 47 are arranged preferably sequentially from the upstream to downstream in the exhaust passage 40. The oxidizing catalyst converter 42 and/or the filter 45 may be collectively referred to as the filter means in this specification.

The first exhaust temperature sensor 41 detects a temperature of exhaust gas preferably just right upstream of the oxidizing catalyst converter 42, and the second exhaust temperature sensor and the third exhaust temperature sensor 47 respectively detect temperatures of exhaust gas preferably right upstream and downstream of the filter 45. The oxidizing catalyst converter 42 preferably comprises an oxidizing catalyst 42a carrying a catalytic material such as platinum or palladium added, and promotes an oxidizing reaction where CO and HC in exhaust gas are converted to CO₂ and H₂O. The filter 45 traps particulates or soot in exhaust gas (PM: particulates, black smoke and other toxic matters).

Although the oxidizing catalyst converter 42 and the filter 45 are separately provided in this embodiment, the oxidizing catalyst converter 42 may be omitted and the filter 45 may be provided with an oxidizing catalytic function, or both of the filter 45 having the oxidizing catalytic function and the oxidizing catalyst converter 42 may be provided. In either case, the filter 45 will be heated with oxidizing reactive heat from the oxidizing catalyst converter 42 or heated with own oxidizing reactive heat from the filter 45 having the oxidizing catalytic function promoting the oxidizing reaction of the exhaust gas.

The first exhaust pressure sensor 44 and second exhaust gas pressure sensor 46 respectively detect pressures of exhaust gas preferably right upstream and downstream of the filter 45 to output signals to the controller 70. The controller 70 determines a difference between the pressures upstream and downstream of the filter 45 detected by the exhaust pressure sensors 44 and 46 and computes or estimates an amount M of particulates trapped in the filter 46 (hereafter referred to as filter trapped amount) based on the determined pressure difference preferably so that the filter trapped amount M is larger as the pressure difference is larger.

A portion of the intake passage 30 downstream of the intake pressure sensor 36 and a portion of the exhaust passage 40 upstream of the turbine 52 preferably are connected through an exhaust gas recirculation passage (hereafter referred to as EGR passage) 66. An EGR cooler 61 and an EGR control valve 62 preferably are provided particularly sequentially from the upstream on the EGR passage 60. The EGR cooler 61 preferably cools the EGR gas flowing in the EGR pipe 60 by introducing the coolant thereto from the engine 10.

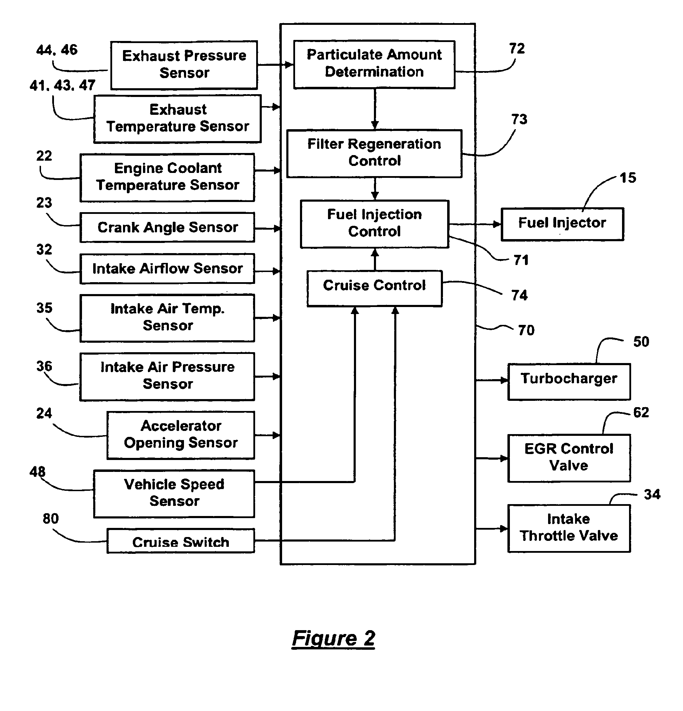

As shown in Figure 2, the controller 70 controls the injector 15, the throttle valve 34, the turbocharger 50, the EGR control valve 62 and/or other actuators based on signals input from the sensors described above. The controller 70 comprises input/output (I/O) interface to input and output signals, a memory portion (ROM and RAM or the like) to store data such as control programs and parameters, a central processing unit (CPU), a counter to count number such as number of times of the filter regeneration, although its physical structure is not shown. And, a fuel injection control by the controller 70 using the injector comprises a main injection control which causes the injector 15 to inject fuel around or substantially at a top dead center of a compression stroke of the cylinder 13 to generate an engine output, a post injection control which causes the injector 15 to inject fuel preferably for a regeneration of the filter 45 and a cruise control which causes the injector 15 to inject fuel for a target cruising speed of a vehicle.

The main injection control is basically performed based on an engine rotational speed and an engine load, and further corrected based on an engine coolant temperature, an intake air temperature and other signals input to the controller 70 described above. The engine load may be determined based on a desired fuel injection amount, or may be determined based on an input signal to the above controller 70 from an accelerator opening sensor 24 (shown only in Figure 2) to detect an accelerator opening (e.g. depressed amount of an accelerator pedal). For the main injection control, post injection control and cruise control, the controller 70 is provided with a fuel injection control means 71 which controls a fuel injection amount and/or a fuel injection timing into the combustion chamber 18.

The post injection control, that is a filter regeneration control, is performed based on one or more signals input from the fist and second exhaust pressure sensors 44 and 46, the crank angle sensor 23, the first through third exhaust temperature sensors 41, 43 and 47, and/or the accelerator opening sensor 24. For the filter regeneration control, the controller 70 is provided with an exhaust particulate amount determining means 72 and a filter regeneration means 73.

The exhaust particulate amount determining means preferably determines the pressure difference between the upstream and the downstream of the filter 45 from exhaust pressures detected by the exhaust pressure sensors 44 and 46, calculates or estimates a filter trapped amount M of exhaust particulate preferably based on this pressure difference, and determines if the calculated filter trapped amount is not less than a regeneration start value a. Although the pressure difference is determined using the first and second exhaust pressure sensors 44 and 46 in this embodiment, a pressure difference sensor may be provided and the detected pressure difference may be directly input to the controller 70.

The filter regeneration means 73, if the above exhaust particulate amount determining means 72 determines a filter trapped amount M is not less than the start condition value a and if an engine load is not less than the predetermined load, operates the injector 15 in an expansion stroke to begin the filter regeneration control to cause fuel to be injected so as to supply unburned fuel to the oxidizing catalyst converter 42. However, the filter regeneration control means 73, if the filter trapped amount M is determined to be not less than the start condition value a and even if the engine load is less than the predetermined load, begins the filter regeneration control, when the cruise control means 74 is performing the cruise control as described later. The predetermined engine load is set as described below. The predetermined engine load is set so that if an engine load is not less than the predetermined load, the engine 10 is at a predetermined higher load condition where efficiency of the filter regeneration is good (that is an exhaust gas temperature is likely to rise), and if an engine load is less than the above predetermined load, the engine is at a predetermined lower load condition where efficiency of the filter regeneration is not good (that is, an exhaust gas temperature is not likely to rise). Fuel control for the filter regeneration control is so that fuel injection amount and fuel injection timing are set depending on an operating condition of the engine 10.

The filter regeneration will now be described. At first, if the exhaust particulate determining means 72 of the controller 70 determines that a filter trapped amount M is not less than the regeneration start value a and if an engine load read by the controller 70 is not less than the predetermined, the filter regeneration means 73 causes the injector 15 to inject fuel into the combustion chamber at a following expansion stroke after a main injection of fuel to the combustion chamber around or substantially at a top dead center of compression stroke (hereafter referring to this injection as first post injection).

Then, fuel injected into the combustion chamber 18 by the first post injection combusts in the combustion chamber 18, and the combustion heat is generated in the combustion chamber 18 and an exhaust gas temperature is raised by the combustion heat. The exhaust gas flows into the oxidizing catalyst converter 42 to heat the oxidizing catalyst converter 42 resulting to activation of the oxidizing catalyst converter 42.

After the first post injection, the filter regeneration means 73 causes the injector 15 to inject fuel into the combustion chamber 18 during the same expansion stroke (hereafter referring to this injection as second post injection). Note that while the second post injection is made after the first post injection in this embodiment, the first and second post injections may be made substantially concurrently.

And, unburned fuel injected into the combustion chamber 18 by this second post injection flows towards or to the oxidizing catalyst converter 42 which is activated by the first post injection, the unburned fuel or hydrocarbon (HC) is oxidized in the oxidizing catalyst converter 42 to generate reaction heat, and the oxidizing reaction heat raises a temperature of the exhaust gas. The reheated exhaust gas enters the filter 45 to heat it. As a result, exhaust particulates or soot trapped in the filter 45 combust (firing temperature of the particulates is for example about 600 °C or higher) to regenerate the filter 45. As described below, the filter regeneration control will be performed until a filter trapped amount M becomes not more than a regeneration completion value β of the filter regeneration. The regeneration completion value β is smaller than the regeneration start value a.

The cruise control is performed based on signals from a vehicle speed sensor 48 (only illustrated in Figure 2) detecting vehicle speed, a cruise switch 80 (only illustrated in Figure 2) and the like. The cruise switch 80 preferably is arranged around or near a steering wheel in front of a driver's seat, and when this is operated to be ON or OFF, it sends an operational signal corresponding to either ON or OFF to the controller 70. For the cruise control, the controller 70 comprises the cruise control means 74.

The cruise control means 74, in a case that the cruise switch 80 is operated ON, performs a cruise control preferably to cause the fuel injection control means 71 to adjust the main injection amount so as to cause a driving speed of the vehicle to be a speed detected at a timing of its ON operation (desired target speed). While a driving speed of the vehicle is maintained to substantially be a speed at a time of ON operation of the cruise switch 80 in this embodiment, it is not limited to this, and for example a driving speed of the vehicle may be coincided with a set speed set based on a predetermined operation of an occupant or a driver.

On the other hand, if the cruise switch 80 is operated OFF and/or a brake is applied during a performance of the cruise control, the cruise control means 74 finishes to perform the cruise control.

In a case that during the filter regeneration an operating condition of the engine 10 transitions to the predetermined lower load region, the first and second post injections are temporarily stopped to prevent fuel economy deterioration.

However, in a case that the cruise control means 74 performs the cruise control and the filter regeneration means 73 performs the filter regeneration, when an operating condition of the engine 10 transitions to the predetermined lower load region for example by the vehicle entering a downhill from a flat road and a main injection amount is decreased, if the first post injection is temporarily stopped, there will be a possibility of occurrence of torque shock as described above. On the other hand, in this case, if the second post injection preferably is temporarily stopped, it may not give any influence to the occurrence of torque shock, since the second post injection will not generate any substantial torque due to its late timing in the expansion stroke or exhaust stroke.

Therefore, the filter regeneration means 73, during the filter regeneration, in a case that the cruise control means 74 performs a cruise control, even when an engine load becomes smaller than the predetermined load, causes the fuel injection control means 71 to make a main injection around or substantially at a top dead center of a compression stroke, then to continue only the first post injection in the following expansion stroke and to stop the second post injection. Although only the first post injection is continuously made in this embodiment, the second post injection may be continuously performed in addition to the first post injection. However, from a point of view to prevent fuel economy deterioration, it is preferable to continue the first post injection and stop the second post injection.

On the other hand, during the filter regeneration, in a case that the cruise control means 74 does not perform a cruise control, when an engine load becomes smaller than the predetermined load, the filter regeneration means 73 causes the fuel injection control means 71 to make a main injection around or substantially at a top dead center of a compression stroke, and then to stop the first and second post injections during the following expansion stroke.

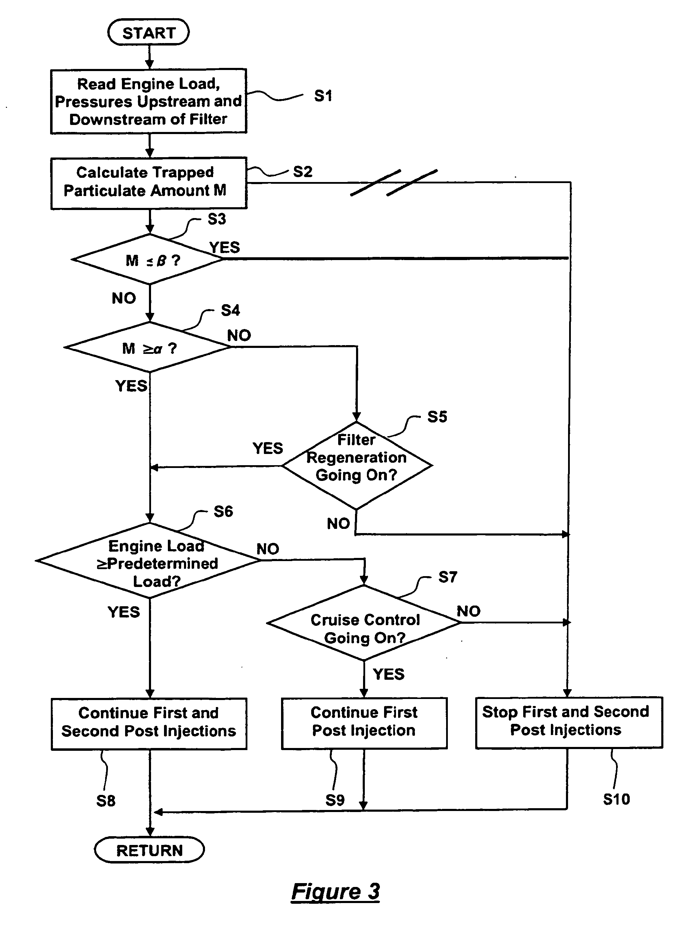

The filter regeneration control by the controller 70 will now be described with reference to a flowchart of Figure 3. At a step S1, an engine load determined based on a desired fuel injection amount and exhaust gas pressures upstream and downstream of the filter 45 detected by the exhaust pressure sensors 44 and 46 are read. At a step S2, a trapped particulate amount M is calculated based on the read exhaust pressures upstream and downstream of the filter 45.

At a step S3, it is determined whether the calculated trapped particulate amount M is equal to or less than the regeneration completion value β of filter regeneration. If a determined result of the step S3 is YES, it proceeds to a step S10, and if NO, it proceeds to a step S4.

At the step S4, it is determined whether the calculated trapped particulate amount M is equal to or more than the regeneration start value a of filter regeneration. If a determined result of the step S4 is YES, it proceeds to a step S6, and if NO, it proceeds to a step S5. At the step S5, it is determined whether a filter regeneration control is going on or not. If a determined result of the step S5 is YES, it proceeds to the step S6, and if NO, it proceeds to the step S10.

At the step S6, it is determined whether the read engine load is the predetermined load or not. If a determined result of the step S6 is YES, it proceeds to a step S8, and if NO, it proceeds to a step S7. At the step S7, it is determined whether a cruise control is going on or not. If a determined result of the step S7 is YES, it proceeds to a step S9, and if NO, it proceeds to a step S10.

At the step S8, if currently a filter regeneration control is not going on, a filter regeneration control is started to make first and/or second post injections during an expansion stroke, and if currently a filter regeneration control is going on, the first and second post injections are continued to be made during an expansion stroke. Then it proceeds to RETURN.

At the step S9, if currently a filter regeneration control is not going on, a filter regeneration control is started to make only a first post injection in an expansion stroke, and if currently a filter regeneration control is going on, only a first post injection is continued to be made in an expansion stroke. Then it proceeds to RETURN.

At the step S10, if currently a filter regeneration control is not going on, no filter regeneration control is started (in other words, first and second post injections are not made in an expansion stroke), and if currently a filter regeneration control is going on, first and/or second post injections in an expansion stroke are stopped. Then, it proceeds to RETURN.

According to the above embodiment, during a filter regeneration performed, if the cruise control means performs a cruise control, even when an engine load becomes smaller than the predetermined load, the filter regeneration means causes the fuel injection means 71 to continue the post injection. Accordingly, an occurrence of torque shock can be advantageously prevented, which can preferably occur by stopping a post injection when an engine operating condition has entered the predetermined low load region where an efficiency of filter regeneration is not good, in a case that the cruise control means 71 performs a cruise control during a filter regeneration.

Also, during a filter regeneration performed, if the cruise control means 71 does not perform a cruise control, when an engine load becomes smaller than the predetermined load, the filter regeneration means 73 causes the fuel injection control means 73 to stop the post injection. That is, during a filter regeneration performed, in a case that the cruise control means 71 does not perform a cruise control, when an engine operating condition has entered the predetermined low load region where efficiency of the filter regeneration is not good, the post injection is preferably stopped. Therefore, fuel economy deterioration can be prevented.

Although, in the above embodiment, the filter regeneration means 73 performs the filter regeneration control based on an engine load based on a required fuel injection amount, it is not limited to this, and for example, a grade detection sensor to detect a grade of a road on which a vehicle drives may be provided, an engine load may be determined based on a grade detected by the grade detection sensor, and the filter regeneration means 73 may perform such a filter regeneration as described above based on the determined engine load.

Accordingly, in a controller 70 for an engine 10 having a filter 45 in an exhaust passage 40 to be occasionally regenerated by raising an exhaust gas temperature, a filter regeneration means 73, if a filter trap amount is determined to be a regeneration start value a or more S3 and an engine load is a predetermined load or more S6, a main injection is made around or substantially at a compression stroke top dead center and then first and/or second post injections are made in the following expansion stroke to perform the filter regeneration S8. Then, the filter regeneration means 73 is configured, during filter regeneration, if a cruise control means 74 is performing a cruise control, even when an engine load becomes smaller than the predetermined load, to cause a main injection around a compression stroke top dead center and then only a first post injection to be continued in the following expansion stroke S9, to prevent an occurrence of torque shock.

The present invention is not limited to the embodiments, and may be implemented in various other forms without departing from its spirit and scope as in the claims. As such, the above embodiments are only examples in any aspects and may not be interpreted to be limited. The scope of the present invention is illustrated with claims and not bound to the specification at all. Further, changes and modifications belonging to the equivalent of the claims may be all within the scope of the present invention.

## Claims

1. A fuel control system for an engine (10) comprising:
a filter means (42, 45) having a filter to trap particulates in exhaust gas from said engine and having oxidizing catalyst function to promote oxidizing reaction of the exhaust gas to heat said filter with heat from the oxidizing reaction;
a fuel control means (71) to control amount and timing of fuel to be injected into at least one combustion chamber of said engine by at least one fuel injector (15);
a filter regeneration means (73) to perform a filter regeneration by causing said fuel control means (71) to make a main injection around or substantially at a top dead center of a compression stroke and then to make at least one post injection during the following expansion stroke when amount of particulates trapped in said filter is more than a predetermined amount (a) and an engine load is higher than a predetermined load, and
a cruise control means (74) to perform a cruise control by causing said fuel control means to control the main injection amount so as to substantially maintain a target driving speed of a vehicle;
wherein said filter regeneration means (73) causes said fuel injection control means (71) to continue said post injection even if an engine load is lower than said predetermined load when said cruise control means performs said cruise control and when said filter regeneration means (73) performs the filter regeneration.

2. The system as described in claim 1, wherein, if said cruise control means (74) does not perform said cruise control when said filter regeneration is performed, said filter regeneration means causes said fuel injection control means (71) to stop said post injection, when an engine load is lower than said predetermined load.

3. The system as described in claim 1 or 2, further comprising a pressure difference detection means (44, 46, 72) for detecting a pressure difference between upstream and downstream of said filter to determine that said predetermined amount of particulates is trapped in said filter if said detected pressure difference is more than a predetermined threshold.

4. The system as described in claim 3, wherein said pressure difference detection means comprises an upstream pressure sensor (44) and a downstream pressure sensor (46) respectively arranged upstream and downstream of said filter.

5. A method for fueling directly in a combustion chamber of an internal combustion engine on a vehicle having a filter to trap particulates in an exhaust system of said engine, comprising the steps of:
supplying a main fuel injection around or substantially at a top dead center in a compression stroke; and
if an engine load is higher than a predetermined threshold and a predetermined amount of particulates is trapped in said filter, supplying at least one post fuel injection after said main fuel injection in an expansion stroke following said compression stroke for regenerating said filter,
wherein said post fuel injection is continued at least partly, even if an engine load is not higher than the predetermined threshold, when cruise control is performed to maintain a target speed of said vehicle.

6. The method as described in claim 5, wherein said post fuel injection is stopped if an engine load is not higher than the predetermined threshold, when said cruise control is not performed.

7. The method as described in claim 5 or 6, wherein said post fuel injection comprises a first post fuel injection and a second post fuel injection supplied after said first post injection, and that said second post fuel injection is stopped while said first fuel injection is continued.

8. The method as described in claim 7, wherein said first post injection is burned in said combustion chamber, and said second post injection is not burned in said combustion chamber.

9. The method as described in claim 8, wherein said second post injection is burned in a catalyst arranged upstream of said filter.

10. The method as described in any one of claims 5 through 9, further comprising a step of detecting a pressure difference between upstream and downstream of said filter to determine if said predetermined amount of particulates is trapped in said filter.

11. A computer program product comprising computer-readable instructions which, when loaded and executed on an engine control system, perform a method for fueling directly in a combustion chamber of an internal combustion engine on a vehicle according to one of the preceding claims 5 to 10.

## Patentansprüche

1. Verfahren zum Steuern bzw. Regeln der Kraftstoffzumessung für eine Kraftmaschine (10), das umfasst:
ein Filtermittel (42, 45) mit einem Filter zum Einfangen von Partikeln in Abgas von der Kraftmaschine und mit einer Katalysatorfunktion zum Fördern der Oxidationsreaktion des Abgases, um das Filter mit Wärme aus der Oxidationsreaktion zu heizen;
ein Mittel (71) zur Brennstoffsteuer- bzw. Regelung, um die Menge und die Zeitsteuerung von Brennstoff zu steuern bzw. zu regeln, der von zumindest einer Brennstoffeinspritzdüse (15) in zumindest eine Verbrennungskammer der Kraftmaschine eingespritzt werden soll,
ein Filterregenerierungsmittel (73) zum Durchführen einer Filterregenerierung, indem das Mittel (71) zur Brennstoffsteuer- bzw. Regelung dazu gebracht wird, eine Haupteinspritzung um einen bzw. im Wesentlichen an einem oberen Totpunkt bzw. Umkehrpunkt eines Verdichtungstakts auszuführen und dann zumindest eine Nacheinspritzung während des folgenden Expansionstakts auszuführen, wenn die Menge an Partikeln, die in dem Filter eingefangen ist, größer als eine vorgegebene Menge (a) ist und eine Kraftmaschinenlast höher als eine vorgegebene Last ist, und
ein automatisches Geschwindigkeitsregelungsmittel bzw. Tempomat (74) zum Durchführen einer automatischen Geschwindigkeitsregelung, indem das Mittel zur Brennstoffsteuer- bzw. Regelung dazu gebracht wird, die Haupteinspritzmenge derart zu steuern bzw. zu regeln, dass eine Zielfahrtgeschwindigkeit eines Fahrzeugs im Wesentlichen aufrechterhalten wird;
wobei das Filterregenerierungsmittel (73) bewirkt, dass das Mittel (71) zur Steuerung- bzw. Regelung der Brennstoffeinspritzung die Nacheinspritzung fortsetzt, selbst wenn eine Kraftmaschinenlast niedriger als die vorgegebene Last ist, wenn das automatische Geschwindigkeitsregelungsmittel (73) die automatische Geschwindigkeitsregelung durchführt und wenn das Filterregenerierungsmittel (73) die Filterregenerierung durchführt.

2. System nach Anspruch 1, wobei, wenn das automatische Geschwindigkeitsregelungsmittel (73) die automatische Geschwindigkeitsregelung nicht durchführt, wenn die Filterregenerierung durchgeführt wird, das Filterregenerierungsmittel bewirkt, dass das Mittel (71) zur Steuerung- bzw. Regelung der Brennstoffeinspritzung die Nacheinspritzung stoppt, wenn eine Kraftmaschinenlast niedriger als die vorgegebene Last ist.

3. System nach Anspruch 1 oder 2, das ferner ein DruckdifferenzErfassungsmittel (44, 46, 72) zum Erfassen einer Druckdifferenz zwischen der stromaufwärtigen und der stromabwärtigen Seite des Filters umfasst, um zu bestimmen, dass die vorgegebene Menge an Partikeln in dem Filter eingefangen ist, wenn die erfasste Druckdifferenz größer als eine vorbestimmte Schwelle bzw. ein Schwellwert ist.

4. System nach Anspruch 3, wobei das Druckdifferenzerfassungsmittel einen stromaufwärtigen Drucksensor (44) und einen stromabwärtigen Drucksensor (46) umfasst, die jeweils stromaufwärtig und stromabwärtig von dem Filter angeordnet sind.

5. Verfahren zum Zuführen von Brennstoff direkt in eine Verbrennungskammer einer Brennkraftmaschine in einem Fahrzeug mit einem Filter zum Einfangen von Partikeln in einem Abgassystem der Kraftmaschine, das die folgenden Schritte umfasst:
Zuführen einer Hauptbrennstoffeinspritzung um einen oder im Wesentlichen an einem oberen Totpunkt in einem Verdichtungstakt; und
wenn die Kraftmaschinenlast höher als eine vorgegebene Schwelle ist und eine vorgegebene Menge an Partikeln in dem Filter eingefangen ist, Zuführen zumindest einer Nachbrennstoffeinspritzung nach der Hauptbrennstoffeinspritzung in einem Expansionstakt, der dem Verdichtungstakt folgt, zum Regenerieren des Filters,
wobei die Nachbrennstoffeinspritzung zumindest teilweise fortgesetzt wird, selbst wenn eine Kraftmaschinenlast nicht höher als die vorgegebene Schwelle ist, wenn die automatische Geschwindigkeitsregelung durchgeführt wird, um eine Zielfahrtgeschwindigkeit des Fahrzeugs aufrecht zu erhalten.

6. Verfahren nach Anspruch 5, wobei die Nachbrennstoffeinspritzung gestoppt wird, wenn die Kraftmaschinenlast nicht höher als die vorgegebene Schwelle ist, wenn die automatische Geschwindigkeitsregelung nicht durchgeführt wird.

7. Verfahren nach Anspruch 5 oder 6, wobei die Nachbrennstoffeinspritzung eine erste Nachbrennstoffeinspritzung und eine zweite Nachbrennstoffeinspritzung umfasst, die nach der ersten Nacheinspritzung zugeführt wird, und wobei die zweite Nachbrennstoffeinspritzung gestoppt wird, während die erste Brennstoffeinspritzung fortgesetzt wird.

8. Verfahren nach Anspruch 7, wobei die erste Nacheinspritzung in der Verbrennungskammer verbrannt wird und die zweite Nacheinspritzung nicht in der Verbrennungskammer verbrannt wird.

9. Verfahren nach Anspruch 8, wobei die zweite Nacheinspritzung in einem Katalysator verbrannt wird, der stromaufwärtig von dem Filter angeordnet ist.

10. Verfahren nach einem der Ansprüche 5 bis 9, das ferner einen Schritt zum Erfassen einer Druckdifferenz zwischen der stromaufwärtigen und der stromabwärtigen Seite des Filters umfasst, um zu bestimmen, ob die vorgegebene Menge an Partikeln in dem Filter eingefangen ist.

11. Computerprogrammprodukt, das computerlesbare Anweisungen umfasst, das, wenn es in ein Kraftmaschinensteuer- bzw. Regelungssystem geladen und dort ausgeführt wird, ein Verfahren zum Zuführen von Brennstoff direkt in eine Verbrennungskammer einer Brennkraftmaschine in einem Fahrzeug gemäß einem der vorangehenden Ansprüche 5 bis 10 umfasst.

## Revendications

1. Dispositif de contrôle de carburant pour un moteur (10), comprenant :
un moyen de filtrage (42, 45) ayant un filtre pour capter des particules dans les gaz d'échappement en provenance dudit moteur et ayant une fonction de catalyseur à oxydation afin de stimuler la réaction d'oxydation des gaz d'échappement pour chauffer ledit filtre avec la chaleur provenant de la réaction d'oxydation ;
un moyen de contrôle de carburant (71) afin de contrôler une quantité et un moment de l'injection de carburant jusque dans au moins une chambre de combustion dudit moteur par au moins un injecteur de carburant (15) ;
un moyen de régénération du filtre (73) pour accomplir une régénération du filtre en provoquant que ledit moyen de contrôle de carburant (71) effectue une injection principale autour ou sensiblement sur une position de point mort supérieur d'une course de compression et effectue ensuite au moins une post-injection pendant la course d'expansion qui s'en suit lorsque la quantité de particules captées dans ledit filtre est supérieure à une quantité prédéterminée (a) et lorsqu'une charge du moteur est plus élevée qu'une charge prédéterminée, et
un moyen de contrôle de la vitesse (74) pour accomplir un contrôle de la vitesse en provoquant que ledit moyen de contrôle de carburant contrôle la quantité d'injection principale de manière à maintenir sensiblement une vitesse de commande cible d'un véhicule ;
dans lequel ledit moyen de régénération du filtre (73) provoque que ledit moyen de contrôle d'injection de carburant (71) continue ladite post-injection, même si une charge de moteur est plus basse que ladite charge prédéterminée lorsque ledit moyen de contrôle de la vitesse accomplit ledit contrôle de la vitesse et lorsque ledit moyen de régénération du filtre (73) accomplit la régénération du filtre.

2. Dispositif tel qu'il est décrit dans la revendication 1, dans lequel, si ledit moyen de contrôle de la vitesse (74) n'accomplit pas ledit contrôle de la vitesse lorsque ladite régénération du filtre est accomplie, ledit moyen de régénération du filtre provoque que ledit moyen de contrôle d'injection de carburant (71) arrête la post-injection lorsqu'une charge du moteur est plus basse que ladite charge prédéterminée.

3. Dispositif tel qu'il est décrit dans l'une ou l'autre des revendications 1 et 2, comprenant en outre un moyen de détection de la pression différentielle (44, 46, 72) pour détecter une pression différentielle entre une position d'amont et une position d'aval dudit filtre afin de déterminer si ladite quantité prédéterminée de particules est captée dans ledit filtre si ladite pression différentielle détectée est supérieure à un seuil prédéterminé.

4. Dispositif tel qu'il est décrit dans la revendication 3, dans lequel ledit moyen de détection de la pression différentielle comprend un capteur de pression d'amont (44) et un capteur de pression d'aval (46) agencés respectivement dans la position d'amont et dans la position d'aval dudit filtre.

5. Procédé pour alimenter le carburant directement dans une chambre de combustion d'un moteur à combustion interne sur un véhicule, ayant un filtre afin de capter des particules dans un dispositif d'échappement dudit moteur, comprenant les étapes suivantes :
l'alimentation d'une injection principale de carburant autour ou sensiblement sur une position de point mort supérieur dans une course de compression ; et
l'alimentation d'au moins une post-injection de carburant après ladite injection principale de carburant dans une course d'expansion qui succède à ladite course de compression pour la régénération dudit filtre, si une charge de moteur est plus élevée qu'un seuil prédéterminé et si une quantité prédéterminée de particules est captée dans ledit filtre,
dans lequel ladite post-injection de carburant est continuée au moins en partie, même si une charge de moteur n'est pas plus élevée que le seuil prédéterminé lorsque le contrôle de la vitesse est accompli afin de maintenir une vitesse cible dudit véhicule.

6. Procédé tel qu'il est décrit dans la revendication 5, dans lequel ladite post-injection de carburant est stoppée si une charge de moteur n'est pas plus élevée que le seuil prédéterminé lorsque ledit contrôle de la vitesse n'est pas accompli.

7. Procédé tel qu'il est décrit dans l'une ou l'autre des revendications 5 et 6, dans lequel ladite post-injection de carburant comprend une première post-injection de carburant et une seconde post-injection de carburant fournie après ladite première post-injection, et dans lequel ladite seconde post-injection de carburant est stoppée tandis que ladite première post-injection de carburant est continuée.

8. Procédé tel qu'il est décrit dans la revendication 7, dans lequel ladite première post-injection est brûlée dans ladite chambre de combustion et dans lequel ladite seconde post-injection n'est pas brûlée dans ladite chambre de combustion.

9. Procédé tel qu'il est décrit dans la revendication 8, dans lequel ladite seconde post-injection est brûlée dans un catalyseur agencé en amont dudit filtre.

10. Procédé tel qu'il est décrit dans l'une quelconque des revendications 5 à 9, comprenant en outre une étape de détection de la pression différentielle entre une position d'amont et une position d'aval dudit filtre afin de déterminer si ladite quantité prédéterminée de particules est captée dans ledit filtre.

11. Produit de programme informatique comprenant des instructions pouvant être lues sur un ordinateur qui, lorsqu'elles sont chargées et exécutées sur un dispositif de contrôle du moteur, accomplissent un procédé pour alimenter le carburant directement dans une chambre de combustion d'un moteur à combustion interne sur un véhicule, conformément à l'une des revendications précédentes 5 à 10.
